# FASCICULE DE BREVET EUROPEEN

(11) **EP 3 648 491 B1**
(45) Date de publication et mention de la délivrance du brevet: **28.06.2023**
(21) Numéro de dépôt: 19205507.7
(22) Date de dépôt: 25.10.2019
(51) Int. Cl.: G06F 9/445, H04W 12/086, H04W 12/30

(54) **ELEMENT SECURISE MULTI-CONFIGURATIONS ET PROCEDE ASSOCIE**
GESICHERTES MULTIKONFIGURATIONSELEMENT UND ENTSPRECHENDES VERFAHREN
MULTI-CONFIGURATION SECURE ELEMENT AND ASSOCIATED METHOD

(30) Priorité: 30.10.2018 FR 1860058
(43) Date de publication de la demande: 06.05.2020
(73) Titulaire: IDEMIA France, 92400 Courbevoie (FR)
(72) Inventeur: GUERIN, Vincent, 33450 IZON (FR); BOISDE, Matthieu, 33850 LEOGNAN (FR)
(74) Mandataire: Idemia

(56) Documents cités:
- EP-A2- 2 731 381
- FR-A1- 2 945 143
- Globalplatform Inc 3: "GlobalPlatform Technology Card Specification V2.3.1", , 1 March 2018 (2018-03-01), pages 1-334, XP055848013, Retrieved from the Internet: URL:https://globalplatform.org/wp-content/ uploads/2018/05/GPC_CardSpecification_v2.3 .1_PublicRelease_CC.pdf [retrieved on 2021-10-05]

## Description

### DOMAINE DE L'INVENTION

La présente invention concerne un élément sécurisé, par exemple utilisé dans un terminal hôte d'utilisateur.

### CONTEXTE DE L'INVENTION

Un élément sécurisé, SE, est un composant ou plate-forme matérielle inviolable (typiquement une puce ou une carte à puce) utilisée dans un terminal hôte (typiquement un terminal mobile) et capable d'héberger, de façon sûre, des applications et des données en conformité avec des règles et des exigences de sécurité fixées par des autorités de confiance.

Il est classiquement utilisé comme élément esclave d'applications résidentes sur le dispositif hôte ou sur un dispositif externe (typiquement un lecteur), c'est-à-dire esclave dans une relation maître-esclave avec une application équipant le terminal hôte ou le dispositif externe.

Un facteur de forme de plus en plus utilisé du SE est l'élément sécurisé embarqué, eSE (pour « embedded Secure Elément »). Cet élément sécurisé embarqué est généralement soudé au terminal hôte.

Les éléments sécurisés sont programmés selon les applications souhaitées.

A titre d'exemple, un eSE peut former l'élément sécurisé nécessaire à de nombreux usages ou services reposant sur une communication NFC (Near Field Communication) mis en oeuvre par un terminal mobile hôte. Par exemple, un service de paiement NFC nécessite des informations bancaires secrètes de l'utilisateur qui sont avantageusement stockées dans l'eSE, à l'abri de tout accès intempestif. C'est aussi le cas d'un service de transport public où l'eSE permet d'identifier l'utilisateur auprès de portiques.

Un autre exemple d'élément sécurisé est l'UICC embarquée (pour « Universal Integrated Circuit Card ») qui procure les références d'un abonné pour s'authentifier sur un réseau de téléphonie mobile. Il s'agit par exemple d'un eSE configuré comme une carte SIM (pour « Subscriber Identity Module » - ou module d'identité d'abonné). On parle alors d'eUICC (pour embedded Universal Integrated Circuit Card).

Pour faciliter le déploiement de ces multiples applications, on a cherché à faciliter la collaboration entre les fabricants d'éléments sécurisés et les fournisseurs de services. A cette fin, le standard GlobalPlatform a été mis en place. La version actuelle de ce standard est la version 2.3.

Dans le cadre de ce standard, plusieurs configurations de SE ont été définies, par exemple une configuration UICC (GlobalPlatform UICC Configuration v2.0) décrivant le comportement du SE pour une application de téléphonie mobile, une configuration eSE (GlobalPlatform Card Secure Element Configuration v1.0 ) décrivant le comportement du SE pour des applications sans contact généralement, une configuration de carte d'identité (GlobalPlatform Card ID Configuration v1.0) décrivant le comportement du SE pour des applications d'identification.

Toutes ces configurations définissent comment le SE doit réagir aux commandes qu'il reçoit de l'application maître ou des applications maîtres du terminal hôte. Elles mettent chacune en oeuvre un unique domaine de sécurité d'émetteur (ou principal ou racine), connu sous l'appellation d'ISD (pour « Issuer Security Domain »).

L'ISD est une application de gestion de sécurité accessible par le seul émetteur du SE, grâce à un secret (généralement un jeu de clés cryptographiques) connu de lui seul.

Il peut être personnalisé au travers d'opérations de gestion de contenu qui font évoluer son contenu.

Par exemple, il peut instancier, en son sein, d'autres domaines de sécurité, dits supplémentaires, accessibles par des fournisseurs de services grâce à des secrets (généralement des clés cryptographiques) propres à chaque domaine et connus du seul fournisseur associé à un domaine.

Il peut également installer des fichiers et des applications dans ces différents domaines de sécurité.

De façon connue, un eSE configuré pour des applications NFC et soudé à un terminal hôte comprend un ISD représentant le fabricant du terminal hôte, lequel autorise, par l'instanciation de domaines de sécurité supplémentaires, l'installation d'applications de paiement sans contact, d'applications de transport sans contact, provenant de différents fournisseurs.

Egalement, un SE configuré comme UICC ou eUICC détenue par un opérateur de téléphonie mobile peut permettre, via l'instanciation de domaines de sécurité supplémentaires dans son ISD, le chargement de différents profils de téléphonie mobile pour accéder, avec par exemple des tarifications différentes, à son ou ses réseaux mobiles.

Il est classique que ces différentes configurations (NFC et UICC) soient utilisées par un même utilisateur. Il serait donc préférable de les avoir sur un unique terminal hôte (son téléphone portable par exemple). La publication de demande de brevet FR2945143A1 divulgue un procédé d'administration d'applications dans lequel on sélectionne un groupe d'une ou plusieurs applications pour que l'une des applications du groupe puisse être utilisée par un dispositif afin de réaliser une transaction sans contact avec un lecteur externe.

### RESUME DE L'INVENTION

Prévoir deux (ou plus) SEs au sein du terminal hôte n'est cependant pas une solution économiquement acceptable. On cherche ainsi à permettre la cohabitation de ces différentes configurations au sein d'un même SE.

De même prévoir une configuration mixte capable de supporter des applications NFC et des applications de téléphonie mobile n'apparaît pas acceptable. D'une part, comme ces deux « mondes » sont mis en oeuvre par des propriétaires différents d'éléments sécurisés, il serait nécessaire de leur communiquer le même secret pour pouvoir accéder à l'ISD du SE. Cette approche n'est pas acceptable pour des raisons évidentes de sécurité. D'autre part, une gestion comportementale complexe (en fait mixte) de la configuration mixte devrait être mise en place pour que le SE adopte le comportement « UICC » ou « eSE » selon le cas. Des développements complexes nuisent à la simplicité des SE voulue par GlobalPlatform.

Les inventeurs ont ainsi envisagé de permettre le chargement de deux (ou plus) configurations, via deux (ou plus) ISDs, au sein du même SE. Il existe cependant un besoin de garantir l'indépendance des configurations, tout en permettant, le cas échéant, qu'elles utilisent des ressources communes (partagées).

Dans ce contexte, l'invention s'intéresse à un élément sécurisé comprenant une pluralité d'applications et un environnement d'exécution pour l'exécution des applications, l'environnement d'exécution étant configuré pour recevoir une commande sur une interface de communication avec l'extérieur de l'élément sécurisé, pour déterminer une application cible pour l'exécution de la commande et pour transmettre, sur l'interface de communication, une réponse à la commande reçue de l'application cible.

Selon l'invention, l'élément sécurisé est caractérisé en ce qu'il comprend une pluralité d'interfaces de communication,
et en ce que l'environnement d'exécution est configuré pour déterminer l'application cible en fonction de l'interface de communication de réception de la commande et pour autoriser l'accès à une ressource applicative de l'élément sécurisé (c'est-à-dire une ressource utilisable dans l'environnement d'exécution, typiquement une application, une interface de programmation d'application ou API ou encore un package ou fichier élémentaire ELF) pour l'exécution de la commande par l'application cible uniquement si cette ressource applicative est associée à l'interface de communication de réception de la commande.

Corrélativement, l'invention concerne également un procédé de traitement dans un élément sécurisé comprenant une pluralité d'interfaces de communication, une pluralité d'applications et un environnement d'exécution pour l'exécution des applications, le procédé comprenant les étapes suivantes :
recevoir une commande sur une interface de communication avec l'extérieur de l'élément sécurisé,
déterminer une application cible pour l'exécution de la commande en fonction de l'interface de communication de réception de la commande,
autoriser l'accès à une ressource applicative de l'élément sécurisé pour l'exécution de la commande par l'application cible uniquement si cette ressource applicative est associée à l'interface de communication de réception de la commande, et
transmettre, sur l'interface de communication, une réponse à la commande reçue de l'application cible.

Ainsi, autant de « mondes » indépendants peuvent être mis en oeuvre qu'il y a d'interfaces de communication. En effet, l'environnement d'exécution selon l'invention, par exemple au niveau d'une machine virtuelle Java Card (nom commercial) comme décrit par la suite, permet la ségrégation des ressources applicatives disponibles en fonction des interfaces de communication et donc le cloisonnement des « mondes ».

Il est ainsi possible de mettre en oeuvre deux ou plusieurs ISD indépendants, et donc deux ou plusieurs configurations de SE indépendantes, en utilisant des interfaces de communication distinctes.

Un SE ainsi obtenu peut faire cohabiter plusieurs propriétaires sans qu'ils n'aient à partager un secret, par exemple un opérateur MNO et un fabricant du terminal hôte gérant, respectivement, des aspects eUICC et des aspects eSE de façon indépendante.

Des caractéristiques optionnelles de modes de réalisation de l'invention sont définies dans les revendications dépendantes.

Selon l'invention, l'élément sécurisé comprend au moins deux applications de gestion de sécurité définissant deux domaines de sécurité d'émetteur, chaque domaine de sécurité d'émetteur étant associé à une interface de communication différente. En effet, les « configurations » telles que définies par GlobalPlatform sont mises en oeuvre par l'instanciation d'une application première ou principale dite ISD. Aussi, cette disposition permet la mise en oeuvre de plusieurs configurations par le biais de plusieurs ISDs correspondants.

Selon une caractéristique particulière, un premier domaine de sécurité d'émetteur est associé à une interface de communication avec contact, par exemple de type ISO/IEC 7816, et un second domaine de sécurité d'émetteur est associé à une interface de communication sans contact, par exemple de type ISO/IEC 14443. Cela permet de distinguer, de façon aisée, deux configurations principales du standard GlobalPlatform.

Selon une autre caractéristique particulière, l'environnement d'exécution est configuré pour gérer un registre d'état de vie pour chacun des deux domaines de sécurité d'émetteur. Ces états de vie selon GlobalPlatform incluent les états OP_READY, INITIALIZED, SECURED, CM_LOCKED et TERMINATED. Cette disposition permet de gérer l'unique élément sécurisé physique comme une pluralité d'éléments sécurisés apparents, chacun régi par l'ISD d'une configuration chargée.

Selon encore une autre caractéristique particulière, un domaine de sécurité et des ressources applicatives associées sont conformes à une des configurations définies par GlobalPlatform (par exemple, configuration eSE, configuration UICC, une configuration carte d'identité, ...). Par exemple, un domaine de sécurité d'émetteur et des ressources applicatives associées sont conformes à la configuration eSE du standard GlobalPlatform. De même (en variante ou en combinaison), un domaine de sécurité d'émetteur et des ressources applicatives associées sont conformes à la configuration UICC du standard GlobalPlatform. L'élément sécurisé ainsi obtenu est conforme au standard GlobalPlatform.

Selon l'invention, l'environnement d'exécution comprend un registre associant, à chacune d'une pluralité de ressources applicatives, un identifiant d'application (AID) propre à la ressource applicative et un indicateur représentatif d'une interface de communication associée (et donc d'un ISD ou « monde » associé). Les deux informations peuvent ainsi constituer un identifiant unique pour chaque ressource applicative, conforme aux exigences du standard GlobalPlatform.

Selon une caractéristique particulière, le registre comporte au moins une ressource applicative associée à un indicateur commun à plusieurs interfaces de communication. Une telle ressource est donc partagée entre différents « mondes ». Il peut s'agir par exemple de fichiers chargés élémentaires (ELF) communs à plusieurs configurations, chacune d'entre elles pouvant instancier par exemple une application à partir des ELFs communs. Cette disposition permet de réduire la consommation mémoire.

Par exemple, les ELFs communs, ou toute autre ressource applicative commune, peut être stockée dans un domaine sécurisé dédié (ou bien encore dans un domaine ISD déjà présent) et visibles dans/par tous les domaines instanciés sur l'élément sécurisé. « visible » signifie ici une accessibilité aux ELFs (ou équivalent) permettant par exemple une instanciation d'une application (à partir de ces ELFs communs) dans un domaine considéré, notamment autre que celui dans lequel sont stockés (rattachés) les ELFs communs.

Dans un autre mode de réalisation, l'environnement d'exécution comprend une variable globale mise à une valeur représentative de l'interface de communication de réception de la commande. Cette disposition facilite la gestion de confinement de l'exécution d'une commande dans un « monde » défini par un ISD ou une configuration donnée. En effet, la valeur de cette variable peut être directement comparée à un indicateur marquant chaque ressource, pour savoir si cette dernière est accessible pendant l'exécution courante.

Dans un autre mode de réalisation, l'environnement d'exécution comporte un environnement d'exécution conforme au standard GlobalPlatform 2.3 et un système d'exploitation interfaçant l'environnement d'exécution conforme à GlobalPlatform 2.3 avec une plateforme matérielle de l'élément sécurisé. Cette architecture est avantageusement conforme à des pratiques classiques.

Dans un mode de réalisation particulier, le système d'exploitation est configuré pour transmettre, à l'environnement d'exécution conforme au standard GlobalPlatform 2.3, toute commande reçue sur une interface de communication, accompagnée d'une indication de l'interface de communication de réception. Cette indication permet à l'environnement d'exécution de mettre à jour la variable globale évoquée plus haut.

Selon une caractéristique particulière, le système d'exploitation (OS) comprend une variable locale mise à une valeur représentative de l'interface de communication de réception de la commande. Cette variable locale permet à l'OS de garder trace de l'interface à utiliser pour transmettre la réponse à la commande.

Dans un autre mode de réalisation particulier, l'environnement d'exécution conforme au standard GlobalPlatform 2.3 comporte un environnement d'exécution Java Card (nom commercial) formé d'une machine virtuelle Java Card et d'interfaces de programmation applicative Java Card, ladite machine virtuelle Java Card étant configurée pour contrôler que toute ressource applicative (module exécutable, application, API) utilisée pour l'exécution de la commande par l'application cible est associée à l'interface de communication de réception de la commande. Un tel contrôle peut avantageusement être mis en oeuvre dans un module pare-feu (ou « firewall ») de la machine virtuelle. Les fonctionnalités classiques du module pare-feu Java se voient donc étendues, par la présente invention, avec ce nouveau rôle de contrôle.

Selon une caractéristique particulière, la machine virtuelle Java Card est configurée, à réception d'une commande accompagnée d'une indication d'interface de communication de réception, pour mettre une variable globale à une valeur représentative de l'interface de communication de réception indiquée.

Selon une autre caractéristique particulière, une interface de programmation applicative, API, Java Card est nativement (i.e. dès sa compilation) associée à une (ou plusieurs) interface de communication spécifique, de sorte que cette API Java Card n'est utilisée que pour l'exécution d'une commande par une application cible associée à l'interface de communication spécifique (ou l'une des interfaces associées nativement à l'API). Cette disposition permet d'améliorer la sécurité de l'élément sécurisé.

Dans un autre mode de réalisation particulier, l'environnement d'exécution conforme au standard GlobalPlatform 2.3 comporte une interface de programmation système dénommée OPEN dans GlobalPlatform 2.3 configurée pour déterminer l'application cible en fonction de l'interface de communication de réception de la commande. Par exemple, l'OPEN peut déterminer, en connaissant l'interface de communication, un canal logique parmi plusieurs canaux logiques partageant le même numéro, mais établis dans des domaines (ou configurations) différents. Par domaine (ou configuration), on entend un ensemble ou environnement dédié à une interface considérée géré par un ISD dédié à cet ensemble ou environnement.

Selon une caractéristique particulière, l'OPEN est configuré pour :
accéder à un registre associant, à chacune d'une pluralité de ressources applicatives, un identifiant d'application (AID) propre à la ressource applicative et un indicateur représentatif d'une interface de communication associée, et
à réception d'une commande de sélection d'une application identifiée par un identifiant AID inclus dans la commande et reçue sur une interface de communication, sélectionner l'application qui, dans le registre, est associée à l'identifiant AID et à l'interface de communication de réception.

Cette sélection tient généralement compte de l'affectation des applications (via leur AID) aux différents canaux logiques lorsque celles-ci sont sélectionnées par une commande SELECT.

Dans encore un autre mode de réalisation, l'environnement d'exécution est configuré pour, à réception, sur une deuxième interface de communication, d'une deuxième commande plus prioritaire que la commande en cours d'exécution par l'application cible :
suspendre l'exécution de la commande par l'application cible et mémoriser une indication représentative de l'interface de communication de réception de la commande suspendue, puis
déterminer une deuxième application cible pour l'exécution de la deuxième commande en fonction de la deuxième interface de communication et contrôler que toute ressource applicative accédée lors de l'exécution de la deuxième commande par la deuxième application cible est associée à la deuxième interface de communication.

L'exécution de la commande suspendue peut reprendre au terme de l'exécution de la deuxième commande plus prioritaire. Cela est rendu possible par la mémorisation ou sauvegarde de l'information de l'interface de communication, car cette information est utilisée pour assurer le contrôle dans l'accès aux ressources applicatives.

### BREVE DESCRIPTION DES FIGURES

D'autres particularités et avantages de l'invention apparaîtront encore dans la description ci-après, illustrée par les figures ci-jointes qui en illustrent des exemples de réalisation dépourvus de tout caractère limitatif. Sur les figures :
- la **figure 1** illustre, de façon schématique, un système comprenant un élément sécurisé pour la mise en oeuvre de modes de réalisation de l'invention ;
- les **figures 2** et **2a** illustrent des exemples de registre GlobalPlatform pour la mise en oeuvre de modes de réalisation de l'invention ;
- la **figure 3** illustre, à l'aide d'un ordinogramme, un cycle général d'un élément sécurisé selon un mode de réalisation ;
- la **figure 4** illustre, à l'aide d'un ordinogramme, des étapes générales réalisées par un système d'exploitation présent dans un élément sécurisé selon des modes de réalisation de l'invention ; et
- les **figures 5a** à **5c** illustrent, à l'aide d'ordinogrammes, des étapes générales réalisées par un environnement d'exploitation GlobalPlatform selon des modes de réalisation de l'invention, respectivement à la réception d'une commande APDU, à la réception d'une réponse APDU et à la réception d'une requête d'accès à une ressource applicative lors de l'exécution d'une commande APDU courante.

### DESCRIPTION DETAILLEE DE L'INVENTION

La présente invention s'intéresse à la convergence de configurations, types configurations GlobalPlatform, au sein d'un même élément sécurisé, SE, typiquement un SE embarqué (par soudure ou équivalent) dans un terminal hôte.

Une configuration selon GlobalPlaftorm par exemple est une mise en oeuvre du standard GlobalPlatform 2.3 qui détaille le comportement du SE, et plus particulièrement de l'application principale de gestion de sécurité, autrement appelée ISD ou domaine de sécurité d'émetteur dans GlobalPlatform, à diverses sollicitations ou commandes de gestion émises par le terminal hôte.

Une configuration est chargée dans le SE, sous forme de package compilé définissant l'ISD, lors de la pré-personnalisation du SE. Aussi, la configuration ne change pas pendant la durée de vie du SE. Seule une personnalisation du SE peut être réalisée par des opérations de gestion de contenus (par exemple chargement, suppression de données telles que des applications ou des profils) au sein de l'ISD.

Un exemple de configuration de SE est la configuration UICC (décrite dans le document GlobalPlatform UICC Configuration v2.0) qui fournit, au sein de l'ISD, un environnement neutre facilitant la gestion à distance OTA (pour « over-the-air ») de l'UICC pour fournir des services mobiles aux abonnés. La communication entre le terminal hôte et l'UICC est généralement réalisée au travers d'une interface de communication ISO par contact, typiquement selon le protocole ISO/IEC 7816.

Un autre exemple de configuration de SE est la configuration eSE (décrite dans le document GlobalPlatform Card Secure Elément Configuration v1.0) qui, à l'instar de la configuration UICC, fournit, au sein de l'ISD, un environnement neutre pour le déploiement de services hors téléphonie mobile. Il peut s'agir d'applications de paiement sans contact, d'applications bancaires, d'applications de transport ou équivalent (passage d'un portique d'accès), etc. Dans ce cas, la communication entre le eSE et un lecteur externe (généralement hors équipement hôte) peut être réalisée au travers d'une interface de communication sans contact (via un module sans contact du terminal hôte, par exemple le CLF), typiquement selon le protocole ISO/IEC 14443.

Bien entendu, d'autres configurations définissant le comportement d'un ISD peuvent être envisagées dans le cadre de la présente invention, qu'elles soient déjà définies par le standard GlobalPlatform ou non.

Chaque configuration, via son ISD et le comportement que celui a en réponse à des sollicitations (commandes), définit donc un « monde » particulier d'élément sécurisé. Par la suite, sauf indication particulière, les termes « monde », « configuration » et « ISD » sont utilisés comme synonymes.

On parlera notamment de « monde » UICC pour désigner par exemple la configuration GP UICC et donc l'ISD mis en oeuvre par une telle configuration. De même on parlera de « monde » eSE pour désigner par exemple la configuration GP eSE et donc l'ISD mis en oeuvre par une telle configuration.

Un objectif de la présente invention est de permettre la cohabitation fonctionnelle de deux ou plus configurations au sein d'un même SE. Cette cohabitation requiert l'assurance d'une indépendance aussi forte que possible entre les configurations, c'est-à-dire entre les ISD correspondants.

L'invention propose d'atteindre cet objectif en configurant l'environnement d'exécution dans lequel les applications et donc les ISDs s'exécutent, de façon appropriée. L'environnement d'exécution est notamment configuré pour associer différentes interfaces de communication du SE à différentes configurations (ou ISDs) respectifs. Il est également configuré de sorte qu'une commande reçue de l'extérieur au travers d'une des interfaces de communication soit exécutée par une application de la configuration associée à l'interface sur laquelle est reçue la commande, et de sorte que cette exécution par l'application ne puisse pas mettre en oeuvre une ressource applicative, telle qu'une autre application ou une API, qui ne soit pas associée à l'interface de communication considérée.

Dans ce contexte, il existe un lien direct entre, d'un côté, « monde », configuration, ISD et, de l'autre côté, interface de communication.

Dans les exemples qui suivent, il est principalement pris l'exemple de deux configurations ou « mondes », à savoir la configuration GP UICC et la configuration GP eSE, associées respectivement à des interfaces avec contact et sans contact. Dans ces exemples toujours, pour des raisons de simplification de l'illustration, chacun(e) de ces « mondes » ou configurations ou interface de communication est identifié(e) au travers d'un identifiant IND, valant par exemple « 00 » pour le « monde »/configuration UICC (et donc l'interface avec contact) et « 01 » pour le « monde »/configuration eSE (et donc l'interface sans contact).

Bien entendu, la présente invention ne se limite pas à cet exemple d'identifiant numérique, et tout autre identifiant, de nature variée, peut être utilisé.

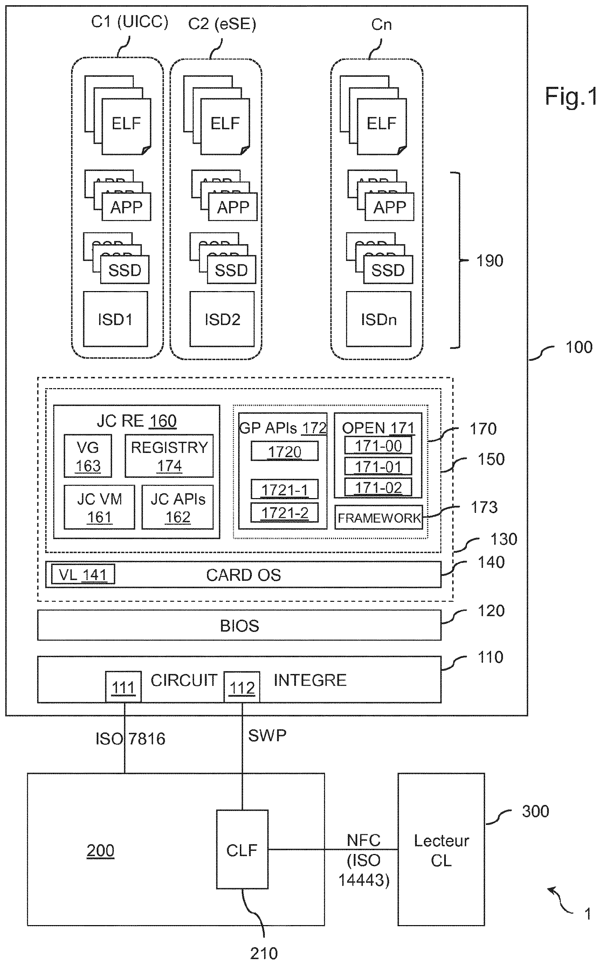

La **figure 1** illustre, de façon schématique, un système 1 comprenant un élément sécurisé 100 pour la mise en oeuvre de modes de réalisation de l'invention.

L'élément sécurisé SE 100 est par exemple embarqué dans un terminal hôte 200, lequel est doté d'un module de communication sans contact CLF (pour « contact-less front-end ») 210 pour communiquer avec un lecteur externe 300 CL. Le terminal hôte 200 et le lecteur externe 300 sont de types connus et ne sont par conséquent pas décrits plus en détails.

Dans cet exemple, l'élément sécurisé 100 est formé d'une plateforme matérielle ou circuit intégré 110, d'un BIOS 120, d'un environnement d'exécution 130 pour l'exécution d'applications ou « applets » 190. Ces applications comportent plusieurs domaines de sécurité d'émetteur, ISD1 à ISDn, au sein desquels d'autres applications APP, SSD peuvent être ou avoir été instanciées à partir de fichiers élémentaire chargés (ELF). Dans l'exemple pris au long du présent document, un premier ISD, référencé ISD1, est conforme à la configuration UICC de GlobalPlatform et un second ISD, référencé ISD2, est conforme à la configuration eSE de GlobalPlatform.

De façon connue en soi, la plateforme matérielle 110 comporte un microprocesseur, des mémoires (vives et mortes) pour le stockage de programmes informatiques et/ou de données d'exécution, des interfaces de communication permettant d'échanger des données entre le microprocesseur et l'extérieur du SE 100 et éventuellement d'alimenter électriquement le SE, et un bus reliant ces différents composants.

Dans l'exemple de la figure, la plateforme matérielle 110 met en oeuvre deux interfaces de communication 111, 112, l'une par contact ISO/IEC 7816 avec le terminal hôte 200 et l'autre sans contact ISO/IEC 14443 ou NFC (pour « Near Field Communication ») avec le lecteur externe 300. L'interface sans contact 112 peut communiquer avec le lecteur externe 300 via le module CLF 210 du terminal hôte 200 auquel cas la liaison SE 100-terminal 200 est conforme au protocole SWP (pour « Single Wire Protocol »), ou peut, en variante, directement communiquer avec le lecteur externe 300 sans passer par le module CLF 210 du terminal hôte 200.

Il ne s'agit que d'un exemple. Un plus grand nombre d'interfaces peut notamment être mis en oeuvre.

Ce sont par ces interfaces de communication 111, 112 que le SE 100 reçoit des commandes de l'extérieur (soit du terminal hôte 200, soit du lecteur 300).

L'interface avec contact 111 est classiquement utilisée pour des échanges entre le terminal hôte 200 et des applications de téléphonie mobile contenues dans le « monde » UICC géré par l'ISD1, alors que l'interface sans contact 112 est classiquement utilisée pour des échanges entre un lecteur externe 300 et des applications hors téléphonie mobile contenues dans le « monde » eSE géré par l'ISD2.

Le BIOS 120 réalise l'interfaçage entre la couche matérielle 110 du SE 100 et les composants natifs du SE tels que l'environnement d'exécution 130 décrit par la suite. Le BIOS 120 est classique ici.

La présente invention propose un environnement d'exécution 130 adapté à déterminer une application cible pour l'exécution d'une commande reçue en fonction de l'interface de communication de réception de la commande et à autoriser l'accès à une ressource applicative de l'élément sécurisé (par exemple une application 190 ou une API GlobalPlatform 172) pour l'exécution de la commande par l'application cible uniquement si cette ressource applicative est associée à l'interface de communication de réception de la commande.

En réalisant ces opérations, l'exécution d'une commande reçue est confinée dans un « monde » de ressources applicatives qui est défini pour l'interface de communication en question, soit le « monde » UICC soit le monde « eSE » dans l'exemple pris ici à titre illustratif. En associant différentes configurations (ou « mondes ») à différentes interfaces de communication, le SE 100 permet désormais d'exécuter plusieurs configurations différentes de façon indépendante. La coexistence de plusieurs configurations au sein d'un même élément sécurisé est ainsi possible.

L'environnement d'exécution 130 est formé d'un système d'exploitation OS 140 et d'un environnement d'exécution haut-niveau 150, par exemple un environnement d'exécution conforme au standard GlobalPlatform 2.3.

Le système d'exploitation 140 réalise des opérations classiques d'un OS d'élément sécurisé, à savoir notamment recevoir une commande sur une interface de communication avec l'extérieur de l'élément sécurisé, la transmettre à l'environnement d'exécution GlobalPlatform 150 pour obtenir une réponse, puis transmettre, sur la même interface de communication, cette réponse alors obtenue.

De façon classique, les commandes remontées à l'environnement d'exécution GlobalPlatform 150 sont des commandes APDU.

L'interaction entre le système d'exploitation 140 et l'environnement d'exécution GlobalPlatform 150 est typiquement simple fil (ou « single thread ») signifiant que le système d'exploitation 140 ne transmet pas, à l'environnement d'exécution GlobalPlatform 150, de nouvelle commande APDU reçue tant que l'exécution de la précédente commande n'est pas terminée.

Dans un mode de réalisation avec gestion de priorités, il peut en être légèrement différent, et cette règle de simple fil peut être contournée pour des commandes hautement prioritaires. Par exemple, si une commande reçue est détectée par l'OS 140 comme plus prioritaire qu'une commande en cours d'exécution, l'OS 140 peut quand même décider de passer cette nouvelle commande à l'environnement d'exécution GlobalPlatform 150 pour exécution immédiate. L'exécution de la commande courante est alors suspendue jusqu'à fin de l'exécution de la nouvelle commande.

Classiquement, le SE 100 ne dispose que d'une seule interface de communication avec l'extérieur. Aussi, pour une commande courante, le système d'exploitation 140 connaît en permanence l'interface de communication de réception de la commande qu'il y a lieu d'utiliser pour transmettre la réponse APDU obtenue en retour.

Dans le cadre de l'invention où plusieurs interfaces de communication 111, 112 sont prévues, l'OS 140 peut mémoriser, dans une variable locale ou globale, un identifiant IND de l'interface de communication sur laquelle la commande courante a été reçue (et donc le « monde » UICC ou eSE correspondant). Par exemple, la variable prend la valeur 00 si l'interface est avec contact (donc pour le « monde » UICC) et prend la valeur 01 si l'interface est sans contact (donc pour le « monde » eSE). Bien entendu, d'autres valeurs peuvent être mises en oeuvre, notamment avec un plus grand nombre d'interfaces concurrentes.

Cette variable permet de garder trace de l'interface à utiliser pour envoyer la réponse qui sera obtenue.

De plus, dans le cas du mode de réalisation avec gestion des priorités, cet identifiant mémorisé dans la variable peut être recopiée dans une autre variable (ou plus généralement dans une liste FILO) lors de la suspension d'une commande courante (à raison du traitement prioritaire d'une autre commande). Cette recopie permet de conserver la trace de l'interface de réception de la commande suspendue pendant toute l'exécution de la commande plus prioritaire. Ainsi, à la fin de cette dernière, l'identifiant recopié peut être remis dans la variable locale ou globale pour permettre à l'OS 140 d'utiliser la bonne interface de communication lorsqu'il s'agira de transmettre la réponse à la commande précédemment suspendue.

La ou les variables utilisées ici pour mémoriser les interfaces de communication utilisées peuvent être locale 141 à l'OS 140 ou être des variables globales 163 utilisées par l'environnement d'exécution GlobalPlatform 150 (et plus particulièrement l'environnement Java Card qu'il contient).

Dans le dernier cas, l'OS 140 n'a plus qu'à transmettre la commande APDU reçue à l'environnement d'exécution GlobalPlatform 150, lequel peut contrôler l'exécution de cette commande comme décrit par la suite pour confiner celle-ci au « monde » UICC ou eSE associé à l'interface mentionnée dans la variable.

Dans le premier cas, l'OS 140 transmet la commande APDU reçue accompagnée d'une indication de l'interface de communication de réception, typiquement la valeur IND (même si d'autres indications sont possibles). Cette indication permet à l'environnement d'exécution GlobalPlatform 150 de renseigner une variable globale 163 décrite ci-après, pour y indiquer l'interface de communication sur laquelle la commande courante a été reçue. Cela permet à nouveau de garder trace du « monde » UICC ou eSE dans lequel l'exécution de la commande courante doit être confinée.

L'environnement d'exécution GlobalPlatform 150 comporte, dans l'exemple de la figure, un environnement d'exécution (ou « runtime environment ») multi-applications 160 et un ensemble de librairies GlobalPlatform 170 pour la gestion sécurisée et l'exécution des applications 190.

L'environnement d'exécution multi-applications 160 est typiquement un environnement d'exécution Java Card (nom commercial) formé d'une machine virtuelle (VM) Java Card 161 et d'une pluralité d'APIs natives définies par le standard Java Card, appelées ici APIs Java Card 162. Une telle machine virtuelle supporte des canaux logiques, signifiant que plusieurs applications peuvent être sélectionnées simultanément via des canaux logiques distincts (identifiés au sein des commandes et réponses APDU).

La VM Java Card 161 reçoit les commandes APDU de l'OS 140 possiblement accompagnées de l'indication des interfaces de communication de réception de ces commandes. Dans ce cas, la VM Java Card 161 met à jour la variable globale 163 avec l'indication d'interface relative à la commande courante : « 00 » pour l'interface avec contact (donc le « monde » UICC) et « 01 » pour l'interface sans contact (donc le « monde » eSE).

Dans le mode de réalisation avec gestion des priorités, la VM Java Card 161 peut également déclarer d'autres variables globales (ou plus généralement une file FILO) pour mémoriser les indications d'interface relatives à une ou plusieurs commandes moins prioritaires suspendues (et dont l'exécution est reprise plus tard).

L'environnement d'exécution Java Card 160 est chargé, sous forme compilée, dans le SE 100 lors de sa pré-personnalisation. Cet environnement n'est pas amené à être modifié lors de la vie du SE.

Cependant, pour des raisons de sécurité, il peut s'avérer utile que l'accès à certaines API Java Card 162 soit limité à certains « mondes » (ou ISDs) et donc interdits à d'autres. Dans ce cas, ces APIs 162 peuvent être marquées comme appartenant à tel ou tel « monde » dès leur compilation, dans un format reconnaissable par la VM Java Card 161 pour en interdire l'accès le cas échéant.

Par exemple, une APl Java Card peut être dédiée à l'interface de communication sans contact NFC 112 (et donc au « monde » eSE), auquel cas il est préférable qu'elle ne soit pas accessible par les applications de téléphonie mobile du « monde » UICC. L'identifiant d'une telle API 162 accessible uniquement par une application hors téléphonie mobile (« monde » eSE) peut alors être complété (préfixe ou suffixe) de l'indicateur IND = « 01 ».

De façon similaire, une API Java Card de type boite à outils (« Toolkit ») ETSI est utilisée par les seules applications de téléphonie mobile (donc le « monde » UICC), et ne devrait pas être accessible par les applications du « monde » eSE. L'identifiant d'une API 162 accessible uniquement par une application de téléphonie mobile (« monde » UICC) peut alors être complété de l'indicateur IND = « 00 ».

Enfin, certaines APIs accessibles par tous les « mondes » peuvent être marquées à l'aide de l'identifiant commun IND = « 02 » voire ne pas être marquées du tout. Des identifiants de groupe peuvent aussi être utilisées pour marquer des APIs comme accessibles par un sousensemble (ou groupe) de configurations installées dans le SE.

Bien entendu, d'autres valeurs et un plus grand nombre d'interfaces peuvent être pris en compte.

L'ensemble de librairies GlobalPlatform 170 défini par le standard GlobalPlatform (GP) comporte un environnement GP connu sous la dénomination d'OPEN 171, des APIs GP 172, un cadriciel de confiance GP (« trusted framework » en langue anglo-saxonne) 173.

De façon connue, l'OPEN 171 fournit des fonctions de sélection d'applications 190 (incluant les domaines de sécurité) traitant des commandes SELECT reçues, de répartition des commandes APDU reçues par la VM Java Card 161 vers des applications cibles, de la sécurisation des commandes et réponses (correspondant à la notion, bien connue par l'homme du métier, de canaux sécurisés (« secure channels »)), de gestion de canaux logiques lors de la sélection multiple d'applications, de gestion du contenu du SE (par exemple vérification, chargement, installation, suppression de contenu tel que des fichiers ELF et des applications) ou encore de gestion de sécurité du SE (pour changer les états de vie des domaines de sécurité, incluant les domaines de sécurité d'émetteur).

Pour la gestion du contenu du SE 100, incluant les domaines de sécurité, l'OPEN 171 tient à jour un registre 174 (stocké par exemple par la VM Java Card 161) qui liste les packages (ou fichiers ELF) chargés en mémoire, typiquement des packages d'applications 190 ou des packages d'APIs GP 172, ainsi que les applications 190 instanciées à partir de ces packages. Ces packages, applications et APIs sont regroupées sous l'appellation de ressources applicatives.

Le registre 174 est par exemple une liste d'AIDs identifiant ces ressources applicatives et il lie chacune d'entre elles au domaine de sécurité auquel elle appartient (soit l'ISD soit un domaine dit supplémentaire (SSD)).

Selon l'invention, pour permettre de contrôler l'accès voire l'exécution de ressources applicatives dans une configuration (par exemple « monde » UICC ou eSE) particulière, le registre 174 associe, à l'identifiant d'application (AID) propre à un package, une API ou une application, l'indicateur IND représentatif du « monde » concerné : IND = « 00 » pour une ressource applicative dédiée au « monde » UICC (interface avec contact), « 01 » pour le « monde » eSE (interface sans contact) ou « 02 » pour une ressource applicative commune aux deux « mondes ».

Aussi, lors du chargement de packages et de l'installation d'applications 190 gérés par l'OPEN 171, ce dernier crée une nouvelle entrée dans le registre 174 à partir de l'AID de ces ressources applicatives, en lui associant, pour les besoins de l'invention, l'indicateur représentatif de l'interface de réception des commandes de chargement/installation (indicateur renseigné dans la variable globale 163 au moment du chargement/installation). De façon connue en soit, une nouvelle entrée est créée dans le registre pour chaque module exécutable ou « package » présent dans un fichier élémentaire ELF chargé (ces modules exécutables incluant donc les APIs) et pour chaque application installée (donc instanciée) à partir de ces modules.

C'est sur la base de ce registre, et plus particulièrement de cet indicateur, que, comme décrit par la suite, la VM Java Card 161 peut mener un contrôle de confinement de l'exécution d'une commande par une application cible dans la configuration UICC ou eSE correspondant à l'interface 111 ou 112 utilisée (telle qu'indiquée dans la variable globale 163).

Le registre 174 peut également mémoriser un état de vie des domaines de sécurité comme défini dans le standard GlobalPlatform. En particulier, dans le cadre de l'invention, le registre 174 peut ainsi être amené à mémoriser l'état de vie de deux (ou plus) ISDs (et donc configurations ou « mondes » différentes) au cours de la vie du SE 100. Le contrôle de ces états de vie des ISDs est sous la responsabilité de l'OPEN 171, qui agit en réponse à des commandes de gestion du SE reçues du propriétaire de la configuration correspondante.

On note ainsi que le SE selon l'invention permet de gérer indépendamment l'état de vie des différentes configurations qu'il héberge. Par exemple, si l'on souhaite bloquer les communications NFC (du monde « eSE »), il est possible de passer l'état de vie de l'ISD2 « eSE » à CARD_LOCKED selon GlobalPlatform (pour un blocage temporaire) voire à TERMINATED (pour un blocage définitif). En même temps, l'ISD1 peut, lui, rester fonctionnel à l'état de vie SECURED. De même, si l'on souhaite bloquer les fonctions de téléphonie mobile, l'état de vie de l'ISD1 « UICC » peut être mis à CARD_LOCKED ou TERMINATED.

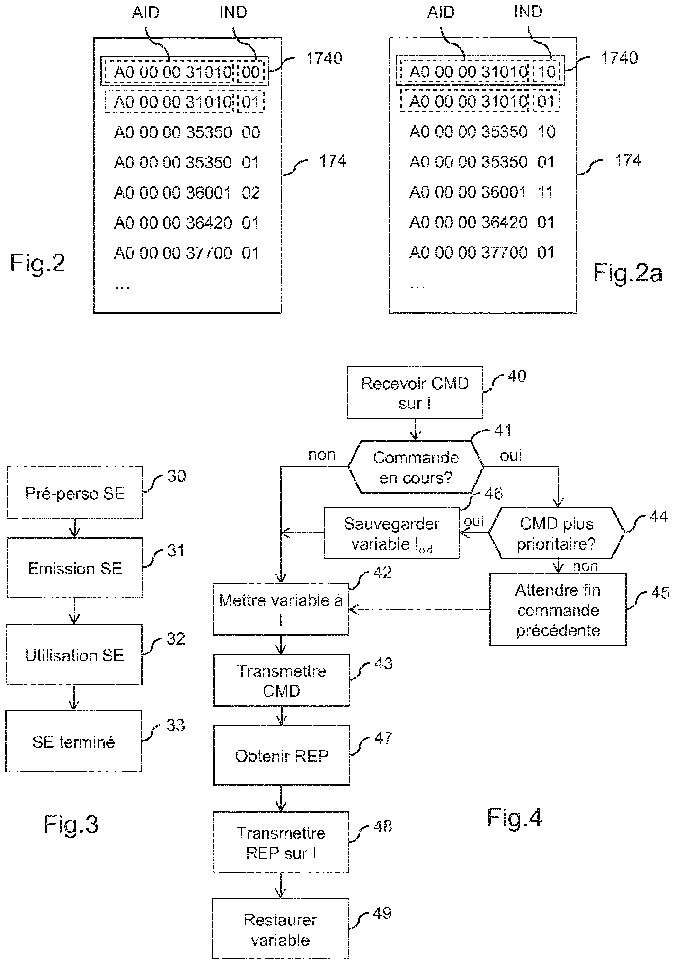

La **figure 2** illustre un exemple de registre 174 avec quelques entrées. Une entrée correspond à une ressource applicative, par exemple un module exécutable (librairie GP ou API GP 172 par exemple) dans un ELF, une application instanciée 190.

Dans cet exemple, deux applications ont le même identifiant AID « A0000031010 » mais sont instanciées dans les deux configurations distinctes UICC et eSE : la première dans le « monde » UICC puisque le registre 174 associe l'indicateur IND « 00 » à l'AID de l'application (première ligne), la deuxième dans le monde eSE puisque l'indicateur IND utilisé est « 01 » (deuxième ligne).

De même, la ressource applicative d'AID « A0000036001 » est accessible par les deux « mondes », son indicateur IND étant commun aux deux « mondes » via sa valeur « 02 ».

On remarquera que l'identifiant 1740 résultant de la concaténation de l'AID et de l'indicateur IND est au final unique dans le SE 100. L'identification des ressources applicatives par des identifiants uniques est donc conforme au standard GlobalPlatform.

La **figure 2a** illustre une variante de registre 174 dans lequel l'indicateur IND est composé de deux bits (ou valeurs ou booléens), chaque bit indiquant à quelle interface est associée la ressource applicative considérée. Par exemple le premier bit indique si le « monde » associé à l'interface avec contact (donc dans l'exemple le « monde » UICC) est associée à la ressource applicative, alors que le second bit indique si le « monde » associé à l'interface sans contact est associé à la ressource applicative. Un indicateur « 11 » indique donc que la ressource applicative est commune aux deux « mondes » UICC et eSE.

Bien entendu le nombre de bits peut être adapté au nombre de « mondes » ou configurations mises en oeuvre simultanément dans le SE 100.

De retour à la **figure 1****,** l'OPEN 171 comporte une partie commune 171-02 aux différents « mondes » mise en oeuvre dans le SE 100. Il s'agit principalement des fonctions introduites ci-dessus (répartition des commandes, sélection d'application, gestion des contenus, etc.).

L'OPEN 171 fournit cependant des services spécifiques à certains « mondes ». Par exemple, l'OPEN 171 fournit des services de cryptage de canaux OTA, par exemple selon le protocole SCP80, qui est uniquement utilisé par les applications de téléphonie mobile (donc le « monde » UICC). Au contraire, certains services sont spécifiques à la gestion de l'interface de communication sans contact NFC, par exemple pour définir des comportements par défaut (donc le « monde » eSE).

Aussi, l'OPEN 171 comporte des services dédiés à des mondes spécifiques, par exemple des services 171-00 dédiés au « monde » UICC (pour l'interface avec contact) et des services 171-01 dédiés au « monde » eSE (pour l'interface sans contact). L'OPEN 171 est alors configuré pour, lors du traitement d'une commande reçue, autoriser ou non l'accès à ses services en fonction de l'interface indiquée dans la variable globale 163 : par exemple si celle-ci indique l'interface sans contact 112 (via la valeur « 01 »), alors seuls les services 171-01 et 171-02 peuvent être invoqués pour le traitement de la commande courante.

Les APIs GP 172 forment un ensemble de services ou librairies utilisées par les applications 190 pour communiquer avec l'extérieur de façon standardisée. Ce sont par exemple ces services qui permettent de décrypter des commandes APDU reçues ou d'encrypter les données de réponse.

Les APIs GP 172 sont donc des ressources applicatives auxquelles les applications 190 exécutant une commande font appel. Aussi, ces APIs sont prévues pour être spécifiques à une configuration (ou ISD) particulier.

Le standard GlobalPlatform définit par exemple deux packages d'APIs GP, l'un étant général (org.globalpatform), l'autre étant spécifique au domaine sans contact (org.globalpatform.contacless). Chaque configuration dispose de son propre package API GP.

Le package de service GlobalPlatform « org.globalplatform.contactless » accessible par les applications du « monde » eSE (pour l'interface sans contact) offre une multitude de services, dont notamment, à titre d'exemples non limitatifs, l'accès à un registre GlobalPlatform dédié au « monde » sans contact (GPCLRegistry), un cadriciel (framework) événementiel permettant aux applications d'être notifiées de l'apparition d'événements.

Le package de service GlobalPlatform « org.globalplatform » accessible par toutes les applications offre d'autres services, dont notamment, à titre d'exemple non limitatif, le service de PIN partagé (pour « Personnal Identification Number ») connu sous la dénomination « GlobalPIN » permettant notamment la vérification d'un code PIN saisi par un utilisateur, la gestion du nombre de tentatives possibles, du nombre de tentatives restantes, etc.

Aussi, dans l'exemple des « mondes » UICC et eSE, un package général d'API GP 1720 est chargé en mémoire du SE pour le « monde » UICC alors que deux packages sont chargés pour le « monde » eSE, l'un général 1721-1 et l'autre spécifique au sans contact 1721-2.

Cela signifie par exemple que dans le registre 174 de la **figure 2**, chaque package chargé est marqué avec l'indicateur IND du « monde » UICC ou eSE correspondant. Par exemple deux packages généraux API GP d'AID « A0000035350 » sont chargés, l'un pour le monde UICC « 00 », l'autre pour le monde eSE « 01 » (voir les lignes 3 et 4), et le package sans contact APl GP d'AID « A0000037700 » est chargé uniquement pour le monde eSE « 01 » (voir dernière ligne).

L'accès à ces APIs GP est sous le contrôle de la VM Java Card 161 qui, selon la valeur prise par la variable globale 163, autorise ou non leur exécution dans le cadre de l'exécution d'une commande courante.

Enfin, le cadriciel de confiance GP (« trusted framework ») 173 offre notamment des services sécurisés de communication entre applications 190. Là encore, la bonne exécution de ces services est contrôlée, comme il sera vu par la suite, par la VM Java Card 161 qui ne peut, selon l'invention, autoriser une application à ne communiquer qu'avec une application de son « monde ». Aussi, là encore, la VM Java Card 161 s'appuie sur la valeur prise par la variable globale 163 pour autoriser ou non une communication entre deux applications.

L'environnement d'exécution 130 ainsi décrit permet la mise en oeuvre indépendante de deux (ou plus) configurations GlobalPlatform chargées dans le SE 100 lors d'une phase de pré-personnalisation de celui-ci.

Une première configuration C1, par exemple la configuration UICC de GlobalPlatform, est mise en oeuvre dans le SE 100, instanciant un premier domaine de sécurité d'émetteur ISD1. Il s'agit d'une application de gestion de sécurité qui possède des privilèges élevés (comparé aux autres applications 190) pour notamment accéder à l'OPEN 171. Cette configuration C1 (et donc l'ISD1) est associée à l'interface ISO 111 avec contact. Dans l'exemple repris ci-dessus, ce « monde » UICC est identifié à l'aide de la valeur IND = « 00 » dans la variable globale 163 et le registre 174.

Une deuxième configuration C2, par exemple la configuration eSE de GlobalPlatform, est mise en oeuvre dans le SE 100, instanciant un deuxième domaine de sécurité d'émetteur ISD2, possédant également des privilèges élevés pour accéder à l'OPEN 171. Cette configuration C2 (et donc l'ISD2) est associée à l'interface 112 sans contact. Dans l'exemple repris ci-dessus, ce « monde » eSE est identifié à l'aide de la valeur IND = « 01 » dans la variable globale 163 et le registre 174.

La figure montre une configuration supplémentaire Cn à titre d'exemple, qui peut être associée à une autre interface de communication.

Les mécanismes de gestion de ces ISDs et de leur contenu demeurent classiques. Notamment le chargement de fichiers élémentaires ELF, l'installation d'applications APP et l'instanciation de domaines de sécurité supplémentaires SSD sont rendus possibles par le jeu de commandes de gestion. Ces mécanismes sont cependant sous le contrôle de l'OPEN 171 comme décrit plus haut, qui, lui, tient compte de l'interface de communication utilisée (indiquée dans la variable globale 163) pour cibler l'ISD1 ou l'ISD2 (ou ISDn) et pour tenir à jour le registre 174 selon le « monde » concerné par une commande de gestion.

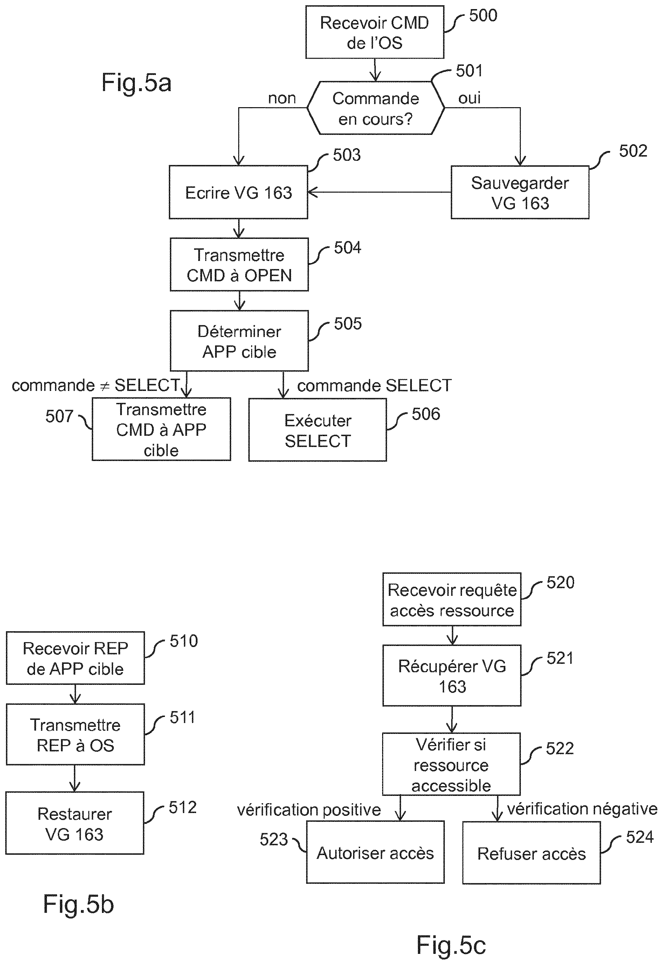

La **figure 3** illustre le cycle général d'un SE 100. La **figure 4** illustre, à l'aide d'un ordinogramme, des étapes générales réalisées par l'OS 140 selon des modes de réalisation de l'invention. Les **figures 5a** à **5c** illustrent, à l'aide d'ordinogrammes, des étapes générales réalisées par l'environnement d'exploitation GP 150 selon des modes de réalisation de l'invention, respectivement à la réception d'une commande APDU, à la réception d'une réponse APDU et à la réception d'une requête d'accès à une ressource applicative lors de l'exécution d'une commande APDU courante.

En référence à la **figure 3**, la fabrication du SE 100 avant délivrance (« issuance ») à un utilisateur final comporte une opération de pré-personnalisation 30 durant laquelle les fonctions natives du SE sont chargées en mémoire du SE 100. Cette opération se fait généralement via l'interface ISO 111 du SE 100.

Notamment, l'OS 140 décrit ci-dessus est compilé puis chargé en mémoire du SE 100. Cet OS 140 est apte à réaliser les opérations décrites en référence à la **figure 4**.

Egalement, la VM Java Card 161 et les APIs Java Card natives 162 sont chargées en mémoire du SE 100. La VM Java Card 161 contribue aux opérations décrites en référence aux **figures 5**, pour notamment contrôler l'exécution d'une commande courante en autorisant ou non l'accès à des ressources applicatives en fonction de la valeur contenue dans la variable globale 163 (par exemple en fonction du « monde » UICC ou eSE considéré, c'est-à-dire de l'interface de communication 111 ou 112 de réception de la commande).

La VM Java Card 161 et les APIs Java Card natives 162 sont compilées avant chargement. En particulier, les APIs Java Card natives 162 sont marquées, lors de leur compilation, comme étant visibles depuis l'un, l'autre ou plusieurs « mondes » (UICC C1 ou eSE C2 dans l'exemple de la **figure 1**) comme décrit plus haut. Ainsi, l'accès aux ressources de type APIs Java Card pour l'exécution d'une commande courante peut également être contrôlé par la VM Java Card 161 en fonction du « monde » courant (identifié dans la variable globale 163).

L'OPEN 171 et le cadriciel 173 sont également chargées en mémoire du SE 100.

Enfin, les ELFs de configurations GP UICC C1 et eSE C2 accompagnés des ELFs des APIs GP correspondantes (1720 pour la configuration UICC C1 et 1721-1 et 1721-2 pour la configuration eSE C2) sont chargés en mémoire du SE 100. Puis les domaines de sécurité d'émetteur ISD1 et ISD2 et éventuellement d'autres applications 190 prévues sont instanciées à partir des ELFs chargés.

Comme évoqué plus haut, ces chargements et instanciations s'accompagnent de la création d'entrées correspondantes dans le registre GP 174 avec marquage du « monde » d'appartenance : une entrée par module exécutable (par exemple une librairie/API GP 172) et une entrée par application 190 (incluant les ISDs) instanciée.

Si l'OPEN 171 crée automatiquement ces entrées lors de ces opérations, l'indicateur IND (voir **figures 2** et **2a**) est mise à une valeur représentative de l'interface 111 avec contact, puisque c'est celle utilisée pour les commandes de chargement des fichiers ELFs et d'installation des applications. Toutes les entrées sont donc initialement marquées par l'indicateur IND = « 00 ». Dans ce cas, une commande propriétaire peut permettre de forcer l'indicateur IND à une autre valeur (« 01 » dans l'exemple) pour les ressources (module exécutable, application) correspondant au « monde » eSE (pour l'interface sans contact), voire à une valeur commune (« 02 » dans l'exemple) pour les ressources partagées.

Une fois le SE 100 pré-personnalisé où chaque module exécutable ou application est marqué comme appartenant à un « monde » (ou plusieurs), le SE 100 est émis (« issued ») à l'étape 31, par exemple embarqué dans un terminal hôte 200. Pour cette opération, le ou les états de vie des ISDs installés sur le SE 100 sont passés au statut « SECURED » comme défini par le standard GlobalPlatform. Cette opération est réalisée soit par l'envoi d'une commande ad *hoc* à l'OPEN 171, soit par l'envoi de commandes propriétaires modifiant directement l'état de vie des ISDs dans le registre 174.

Dans un mode de réalisation, chacun des ISDs (et donc chaque « monde » ou configuration) a son propre état de vie. En effet, chaque ISD correspond à une configuration distincte indépendante qui, d'un observateur extérieur, s'apparente à un élément sécurisé distinct. L'invention permet alors de gérer différents cycles de vie pour ces différents éléments sécurisés apparents.

En variante cependant, un seul état de vie peut être mis en oeuvre pour l'ensemble (ou en variante un sous-groupe) des ISDs du SE 100, par exemple pour l'ISD1.

Après émission, le SE 100 peut être utilisé (étape 32) dans le terminal hôte 200. Les étapes des **figures 4** et **5** décrites par la suite concernent des opérations réalisées par le SE 100 au cours de son utilisation.

Les ISDs formant le SE 100 peuvent progressivement être mis dans un état de vie « TERMINATED » durant son utilisation. Lorsque tous les ISDs sont marqués comme terminés, le SE 100 n'est plus utilisable (étape 33).

Lors de l'étape 32, le SE 100 est généralement utilisé comme esclave dans une relation maître-esclave avec une application résidante équipant le terminal hôte 200 ou le lecteur sans contact 300 (ou plus généralement tout dispositif externe). En d'autres termes, le SE 100 reçoit des commandes, typiquement APDU, de l'application résidante et y répond avec des réponses correspondantes, typiquement APDU.

En référence à la **figure 4****,** l'OS 140 reçoit donc, à l'étape 40, une commande APDU CMD sur une interface de communication I, par exemple l'interface 112 sans contact pour solliciter une application 190 de la configuration eSE C2.

L'OS 140 étant simple fil (ou « single thread »), il détermine à l'étape 41 s'il y a déjà une commande en cours d'exécution par l'environnement d'exécution GP 150.

Dans la négative, l'OS 140 met la variable locale 141 ou la variable globale 163 (selon le mode de réalisation) à une valeur IND représentative de l'interface I de réception de la commande. Dans l'exemple, la variable prend la valeur « 01 » car l'interface I est l'interface 112 sans contact. C'est l'étape 42.

Suite à l'étape 42, l'OS 140 transmet la commande CMD reçue à l'environnement d'exécution GP 150 pour exécution. C'est l'étape 43.

De préférence, la commande est accompagnée de l'indication IND représentative de l'interface I, par exemple « 01 » dans l'exemple. Cette indication permet à la VM Java Card 161 de mettre la variable globale 163 à la valeur correcte pour confiner l'exécution de la commande CMD dans le bon « monde », c'est-à-dire le « monde » (ou configuration) associé à l'interface de communication par laquelle la commande CMD a été reçue. Ce « monde » (ou configuration) est également appelé « monde » (ou configuration) courant ou active par la suite.

En présence d'une commande déjà en cours d'exécution (sortie « oui » du test 41), l'OS 140 détermine, à l'étape 44, si la commande CMD reçue est plus prioritaire que celle en cours d'exécution. Cette détermination peut en outre vérifier si la priorité de la commande CMD reçue est supérieure à une priorité seuil de déclenchement d'une procédure de priorisation (la priorité seuil pouvant être définie de façon absolue - c'est-à-dire à une valeur de priorité fixe - ou relativement à la commande en cours d'exécution - par exemple N niveaux de priorité au-dessus de la commande en cours).

L'étape 44 est optionnelle en ce que l'OS 140 peut ne pas mettre en oeuvre de mécanisme de priorisation des commandes (dans ce cas l'étape 44 n'est pas réalisée).

Dans la négative (la commande CMD n'est pas plus prioritaire), l'OS 140 attend la fin de la commande en cours d'exécution (et éventuellement d'autres commandes déjà reçues et suspendues pour l'instant, éventuellement plus prioritaires) à l'étape 45 avant de passer à l'étape 42 visant à configurer l'OS 140 dans le « monde » correspondant à la commande CMD avant de transmettre cette dernière pour exécution (étape 43).

Par exemple, l'OS 140 peut constituer une file d'attente des commandes reçues et non encore traitées. Cette file d'attente peut être du type FIFO (pour « First In, First Out » - ou premier entré, premier sorti). Dans un mode de réalisation, un niveau de priorité des commandes reçues peut être pris en compte pour ordonner les commandes en attente au sein de la file d'attente par ordre de priorité (la plus prioritaire sortant en premier).

Dans l'affirmative (commande CMD plus prioritaire), l'OS 140 décide de donner priorité à la nouvelle commande CMD reçue par rapport à celle en cours d'exécution. Pour ce faire, l'OS 140 sauvegarde l'état de la variable locale 141 ou variable globale 163 (selon le cas) pour la commande en cours d'exécution. La valeur de la variable peut par exemple être stockée dans une file FILO (premier entré, dernier sorti), ce qui permet d'imbriquer récursivement plusieurs commandes plus prioritaires. C'est l'étape 46 avant de passer à l'étape 42 déjà décrite pour configurer l'OS 140 dans le « monde » correspondant à la commande CMD avant de transmettre cette dernière pour exécution (étape 43).

L'exécution de la commande CMD transmise à l'environnement d'exécution GP 150 conduit, pour l'OS 140, à recevoir, à l'étape 47, une réponse APDU REP de l'environnement d'exécution GP 150 (généralement de la VM Java Card 161).

A l'étape 48, l'OS 140 utilise la valeur stockée dans la variable (locale 141 ou globale 163) pour connaître l'interface I sur laquelle transmettre la réponse REP à destination de l'application résidante.

Dans le cas où le mécanisme de priorisation a été mis en oeuvre (donc lorsque la file FILO n'est pas vide), l'étape 48 est suivie de l'étape 49 au cours de laquelle l'OS 140 restaure la variable locale 141 ou globale 163 pour la commande dernièrement suspendue. Il s'agit de mettre cette variable à la première valeur de la file FILO.

En référence maintenant aux **figures 5a** à **5c**, l'environnement d'exploitation GP 150 reçoit trois types de messages qui induisent des traitements distincts en lien avec la présente invention : d'une part une commande CMD transmise par l'OS 140, d'autre part une réponse APDU résultant de l'exécution de la commande CMD, et de tierce part une requête d'accès à une ressource applicative lors de l'exécution de la commande CMD courante (parfois plusieurs requêtes sont reçues lors de l'exécution de la même commande CMD).

A l'étape 500, la VM Java Card 161 reçoit la commande CMD de l'OS 140, éventuellement accompagnée de l'indication IND représentative de l'interface I de réception de la commande.

A l'étape 501, la VM Java Card 161 détermine s'il y a déjà une commande en cours d'exécution auquel cas le mécanisme de priorisation de commande est mis en oeuvre.

Dans l'affirmative, la VM Java Card 161 sauvegarde (étape 502) la valeur de la variable globale 163, par exemple dans une file FILO (comme décrite en lien avec l'étape 46 ci-dessus).

Dans la négative ou suite à l'étape 502, la VM Java Card 161 procède à l'étape optionnelle 503 (dans le cas où l'OS 140 n'a pas mis à jour la variable globale 163) où elle met la variable globale 163 à la valeur IND accompagnant la commande CMD, soit à la valeur « 01 » dans l'exemple (« monde » ou configuration eSE utilisant l'interface sans contact).

La suite des traitements (**figures 5a** à **5c**) est alors réalisée alors qu'un seul « monde » (ou configuration) est « actif » ou « courant », tel qu'indiqué désormais dans la variable globale 163.

La commande CMD est passée à l'OPEN 171 à l'étape 504 pour déterminer (étape 505) l'application cible devant exécuter cette commande.

De façon connue, les commandes de type SELECT sont exécutées par l'OPEN 171 lui-même dans un processus de sélection d'une application. Les autres commandes sont exécutées par l'une des applications 190 que l'OPEN 171 identifie grâce au canal logique indiqué dans la commande CMD.

S'il s'agit d'une commande SELECT indiquant un canal logique parmi les 20 canaux logiques disponibles dans le format APDU, l'OPEN 171 l'exécute à l'étape 506. L'exécution consiste pour l'OPEN 171 à déterminer si l'AID indiqué dans la commande SELECT correspond à une entrée du registre 174 et si cette entrée (donc application) est sélectionnable.

Compte tenu de la pluralité de configurations (ou « mondes ») dans le SE 100 selon l'invention, l'OPEN 171 tient en outre compte du « monde » actif, c'est-à-dire de la valeur courante IND stockée dans la variable globale 163. Par exemple, l'OPEN 171 peut concaténer l'AID indiqué dans la commande avec la valeur courante IND (« 01 » dans l'exemple) pour constituer un identifiant unique d'entrée du registre 174 (voir **figure 2** par exemple). Ainsi, si une entrée du registre 174 correspond à cet identifiant unique et est sélectionnable, l'OPEN 171 la sélectionne en lui affectant le canal logique indiqué dans la commande SELECT.

En d'autres termes, l'OPEN 171 accède le registre 174 associant à chacune d'une pluralité de ressources applicatives, un identifiant d'application (AID) propre à la ressource applicative et un indicateur représentatif d'une interface de communication associée, et sélectionne, à réception de la commande de sélection d'une application identifiée par un identifiant AID et reçue sur l'interface de communication I, l'application qui, dans le registre, est associée à l'identifiant AID et à l'interface de communication de réception.

S'il s'agit d'une commande autre que la commande SELECT, la détermination de l'application cible à l'étape 505 consiste à identifier le canal logique indiquée dans la commande CMD pour le « monde » actif tel qu'indiqué dans la variable globale 163. En effet, si vingt canaux logiques sont disponibles dans le format de commandes APDU, ces canaux sont dupliqués dans les différentes (deux voire plus) configurations disponibles dans le SE 100. Cette situation selon l'invention résulte de la correspondance/association « monde » - interface (un monde par interface) et du fait qu'il y ait duplication des canaux logiques par interface. Aussi, l'OPEN 171 doit uniquement choisir le canal logique en lien avec le « monde » actif (donc associé à l'interface de communication utilisée pour la réception de la commande CMD).

L'application cible est alors l'application sélectionnée pour le canal logique ainsi déterminé dans le « monde » actif.

De la sorte, l'OPEN 171 détermine l'application cible en fonction de l'interface de communication I de réception de la commande CMD.

L'OPEN 171 transmet alors la commande CMD à l'application cible via ce canal logique déterminé. C'est l'étape 507.

L'exécution de la commande CMD, qu'elle soit de type SELECT ou non, conduit à la génération d'une réponse REP. A l'étape 510, la VM Java Card 161 reçoit donc, de l'application cible ayant exécuté la commande CMD, une réponse REP.

La VM Java Card 161 transmet alors cette réponse REP à l'OS 140, lors de l'étape 511.

Puis, à l'étape 512, la VM Java Card 161 restaure la première valeur de la liste FILO dans la variable globale 163 (de façon similaire à l'étape 49 décrite plus haut). L'étape 512 permet à l'environnement d'exécution GP 150 de mettre à jour l'indication représentative du « monde » courant pour la ou les commandes suspendues dont l'exécution va reprendre suite au traitement de la commande CMD.

L'exécution de la commande CMD (typiquement une commande autre que SELECT) requiert parfois l'accès à des ressources extérieures à l'application cible, par exemple l'accès à d'autres applications 190, l'accès à des APIs GP 172 ou Java Card 162.

C'est le cas pour des commandes de gestion de contenu du SE (« Card Content Management command ») traitées par l'ISD de la configuration active. Par exemple, l'installation d'un nouveau package (nouveaux ELF) peut être faite en référence à d'autres fichiers ELF déjà chargés dans le SE 100, qu'il y a lieu de recopier.

C'est aussi le cas pour des commandes à destination d'applications installées dans les ISDs et dont l'exécution nécessite des services d'autres applications (mécanisme de partage ou « sharing »).

Ces diverses commandes peuvent également nécessiter l'accès à des APIs pour des besoins protocolaires (protocole SWP via une API Java Card), des besoins en cryptographie (protocole SCP80 via une API GP), etc.

Selon l'invention, l'accès à de telles ressources applicatives du SE 100 pour l'exécution de la commande CMD par l'application cible n'est autorisé que si ces ressources applicatives sont accessibles pour la configuration active, donc si elles sont associées à l'interface de communication I de réception de la commande telle qu'indiquée dans la variable globale 163. A chacune des requêtes d'accès à de telles ressources, la VM Java Card 161 opère donc un contrôle d'accès. Ce contrôle peut typiquement être opéré par un pare-feu (ou « firewall ») Java Card au sein de la VM Java Card 161. Comme déjà vu précédemment, les fonctionnalités classiques du pare-feu se voient donc étendues, par la présente invention, avec ce nouveau rôle de contrôle d'accès.

Un tel contrôle est par exemple également réalisé par l'OPEN 171 lorsqu'il s'agit d'accéder à ses propres services 171-00 à 171-02.

Aussi, à l'étape 520 qui a lieu pendant l'exécution de la commande CMD (c'est-à-dire entre les étapes 504 et 510, la VM Java Card 161 détecte une requête d'accès à une ressource applicative. Cette requête provient de l'exécution de la commande CMD par l'application cible dans l'environnement d'exécution Java Card 160 (JCRE pour Java Card Runtime Environment).

Cette ressource applicative sollicitée correspond, dans le registre 174, à un AID complété de l'indicateur IND.

A l'étape 521, la VM Java Card 161 récupère la valeur de la variable globale 163, indiquant la configuration active, soit la configuration eSE dans l'exemple (IND = « 01 »).

A l'étape 522, la VM Java Card 161 vérifie que la ressource applicative sollicitée est accessible dans la configuration active, ici la configuration eSE. Elle peut par exemple vérifier que l'indicateur IND de la ressource sollicitée correspond à la valeur prise par la variable globale 163, ou qu'il s'agit d'une valeur commune englobant l'interface indiquée par la variable globale 163.

Par exemple, si la variable globale 163 est mise à 01 (interface sans contact), des ressources ayant un indicateur IND à « 01 » ou « 02 » (dans le cas de la **figure 2**) sont accessibles (ou « 01 » ou « 11 » dans le cas de la **figure 2a**).

Dans l'affirmative, l'exécution de la commande CMD peut se poursuivre en autorisant l'accès à la ressource sollicité (étape 523).

Dans la négative, la VM Java Card 161 refuse l'accès à la ressource sollicitée (étape 524). Ce refus peut conduire à un échec de l'exécution de la commande CMD si l'application cible l'exécutant ne sait pas gérer ce refus. Dans le cas contraire (l'application cible gère le refus), l'exécution de la commande CMD peut se poursuivre.

Plusieurs requêtes d'accès à d'autres ressources peuvent être émises au cours de l'exécution de la même commande CMD.

## Revendications

1. Elément matériel sécurisé (100) comprenant une pluralité d'applications (190) et un environnement d'exécution (130, 150, 160) pour l'exécution des applications, l'environnement d'exécution étant configuré pour recevoir une commande (CMD) sur une interface de communication (I) avec l'extérieur (200, 300) de l'élément matériel sécurisé, pour déterminer une application cible pour l'exécution de la commande en utilisant une ressource applicative parmi une pluralité de ressources applicatives de l'élément matériel sécurisé, et pour transmettre, sur l'interface de communication, une réponse (REP) à la commande reçue de l'application cible,
l'élément matériel sécurisé étant **caractérisé en ce qu'**il comprend une pluralité d'interfaces de communication (111, 112) et une pluralité d'applications de gestion de sécurité définissant une pluralité de domaines de sécurité d'émetteur (ISD1, ISD2, ISDn), chaque domaine de sécurité d'émetteur étant respectivement associé à une interface de communication différente (111, 112) ;
**en ce que** l'environnement d'exécution (130, 150, 160) comprend un registre (174) associant, à chaque ressource applicative parmi la pluralité de ressources applicatives, un identifiant d'application (AID) propre à la ressource applicative et un indicateur (IND) représentatif d'une interface de communication associée, dans lequel le registre associe en outre à chaque application parmi la pluralité d'applications (190), un identifiant d'application (AID) propre à l'application et un indicateur (IND) représentatif d'une interface de communication associée ;
et **en ce que** l'environnement d'exécution est configuré pour déterminer l'application cible en fonction de l'interface de communication de réception de la commande et pour autoriser l'accès à une ressource applicative de l'élément matériel sécurisé pour l'exécution de la commande par l'application cible uniquement si cette ressource applicative est associée à l'interface de communication de réception de la commande.

2. Elément matériel sécurisé selon la revendication 1, dans lequel un premier domaine de sécurité d'émetteur (ISD1) est associé à une interface de communication avec contact (111), par exemple de type ISO/IEC 7816, et un second domaine de sécurité d'émetteur (ISD2) est associé à une interface de communication sans contact (112), par exemple de type ISO/IEC 14443.

3. Elément matériel sécurisé selon la revendication 1, dans lequel l'environnement d'exécution est configuré pour gérer un registre (174) d'état de vie pour chacun des deux domaines de sécurité d'émetteur (ISD1, ISD2).

4. Elément matériel sécurisé selon la revendication 1, dans lequel un domaine de sécurité d'émetteur (ISD2) et des ressources applicatives associées sont conformes à la configuration eSE du standard GlobalPlatform 2.3, et/ou un domaine de sécurité d'émetteur (ISD1) et des ressources applicatives associées sont conformes à la configuration UICC du standard GlobalPlatform 2.3.

5. Elément matériel sécurisé selon la revendication 1, dans lequel le registre (174) comporte au moins une ressource applicative associée à un indicateur commun à plusieurs interfaces de communication.

6. Elément matériel sécurisé selon la revendication 1, dans lequel l'environnement d'exécution (130, 150, 160) comprend une variable globale (163) mise à une valeur représentative de l'interface de communication (I, 111, 112) de réception de la commande.

7. Elément matériel sécurisé selon la revendication 1, dans lequel l'environnement d'exécution comporte un environnement d'exécution (150) conforme au standard GlobalPlatform 2.3 et un système d'exploitation (140) interfaçant l'environnement d'exécution conforme à GlobalPlatform 2.3 avec une plateforme matérielle (110) de l'élément matériel sécurisé

8. Elément matériel sécurisé selon la revendication 7, dans lequel le système d'exploitation (140) est configuré pour transmettre, à l'environnement d'exécution conforme au standard GlobalPlatform 2.3 (150), toute commande (CMD) reçue sur une interface de communication (I, 111, 112), accompagnée d'une indication (IND) de l'interface de communication de réception.

9. Elément matériel sécurisé selon la revendication 7, dans lequel le système d'exploitation (140) comprend une variable locale (141) mise à une valeur représentative de l'interface de communication (I, 111, 112) de réception de la commande.

10. Elément matériel sécurisé selon la revendication 7, dans lequel l'environnement d'exécution conforme au standard GlobalPlatform 2.3 (150) comporte un environnement d'exécution Java Card (160) formé d'une machine virtuelle Java Card (161) et d'interfaces de programmation applicative Java Card (162), ladite machine virtuelle Java Card étant configurée pour contrôler que toute ressource applicative utilisée pour l'exécution de la commande (CMD) par l'application cible est associée à l'interface de communication de réception de la commande.

11. Elément matériel sécurisé selon la revendication 10, dans lequel la machine virtuelle Java Card (161) est configurée, à réception d'une commande (CMD) accompagnée d'une indication (IND) d'interface de communication de réception, pour mettre une variable globale (163) à une valeur représentative de l'interface de communication de réception indiquée.

12. Elément matériel sécurisé selon la revendication 10, dans lequel une interface de programmation applicative, API, Java Card (162) est nativement associée à une interface de communication spécifique, de sorte que cette API Java Card n'est utilisée que pour l'exécution d'une commande par une application cible associée à l'interface de communication spécifique.

13. Elément matériel sécurisé selon la revendication 7, dans lequel l'environnement d'exécution conforme au standard GlobalPlatform 2.3 (150) comporte une interface de programmation système (170) dénommée OPEN dans GlobalPlatform 2.3 configurée pour déterminer l'application cible en fonction de l'interface de communication de réception de la commande.

14. Elément matériel sécurisé selon la revendication 13, dans lequel l'OPEN (171) est configuré pour :
accéder à un registre (174) associant, à chacune d'une pluralité de ressources applicatives (190), un identifiant d'application (AID) propre à la ressource applicative et un indicateur (IND) représentatif d'une interface de communication associée, et
à réception d'une commande de sélection d'une application identifiée par un identifiant AID inclus dans la commande et reçue sur une interface de communication, sélectionner l'application qui, dans le registre, est associée à l'identifiant AID et à l'interface de communication de réception.

15. Elément matériel sécurisé selon la revendication 1, dans lequel l'environnement d'exécution (130) est configuré pour, à réception, sur une deuxième interface de communication, d'une deuxième commande plus prioritaire que la commande en cours d'exécution par l'application cible :
suspendre l'exécution de la commande par l'application cible et mémoriser une indication représentative de l'interface de communication de réception de la commande suspendue, puis
déterminer une deuxième application cible pour l'exécution de la deuxième commande en fonction de la deuxième interface de communication et contrôler que toute ressource applicative accédée lors de l'exécution de la deuxième commande par la deuxième application cible est associée à la deuxième interface de communication.

16. Procédé de traitement dans un élément matériel sécurisé (100) comprenant une pluralité d'interfaces de communication (I, 111, 112), une pluralité d'applications (190), une pluralité de ressources applicatives, et un environnement d'exécution (130, 150, 160) pour l'exécution des applications en utilisant une ressource applicative parmi la pluralité de ressources applicatives, dans lequel l'élément matériel sécurisé (100) comprend en outre une pluralité d'applications de gestion de sécurité définissant une pluralité de domaines de sécurité d'émetteur (ISD1, ISD2, ISDn), chaque domaine de sécurité d'émetteur étant respectivement associé à une interface de communication différente (111, 112), dans lequel l'environnement d'exécution (130, 150, 160) comprend un registre (174) associant, à chaque ressource applicative parmi la pluralité de ressources applicatives, un identifiant d'application (AID) propre à la ressource applicative et un indicateur (IND) représentatif d'une interface de communication associée, dans lequel le registre associe en outre à chaque application parmi la pluralité d'applications (190), un identifiant d'application (AID) propre à l'application et un indicateur (IND) représentatif d'une interface de communication associée, le procédé comprenant les étapes suivantes :
recevoir (40) une commande (CMD) sur une interface de communication (I, 111, 112) avec l'extérieur (200, 300) de l'élément matériel sécurisé,
déterminer (505) une application cible pour l'exécution de la commande en fonction de l'interface de communication de réception de la commande,
autoriser (523) l'accès à une ressource applicative de l'élément matériel sécurisé pour l'exécution de la commande par l'application cible uniquement si cette ressource applicative est associée à l'interface de communication de réception de la commande, et
transmettre (48), sur l'interface de communication, une réponse (REP) à la commande reçue de l'application cible.

## Patentansprüche

1. Sicheres Hardwareelement (100), das eine Vielzahl von Anwendungen (190) und eine Ausführungsumgebung (130, 150, 160) zur Ausführung der Anwendungen beinhaltet, wobei die Ausführungsumgebung dazu konfiguriert ist, über eine Kommunikationsschnittstelle (I) zu der Außenwelt (200, 300) des sicheren Hardwareelements einen Befehl (CMD) zu empfangen, eine Zielanwendung zur Ausführung des Befehls unter Verwendung einer Anwendungsressource einer Vielzahl von Anwendungsressourcen des sicheren Hardwareelements zu bestimmen und eine von der Zielanwendung empfangene Antwort (REP) auf den Befehl über die Kommunikationsschnittstelle zu übertragen,
wobei das sichere Hardwareelement **dadurch gekennzeichnet ist, dass** es eine Vielzahl von Kommunikationsschnittstellen (111, 112) und eine Vielzahl von Sicherheitsverwaltungsanwendungen, die eine Vielzahl von Herausgebersicherheitsdomänen (ISD1, ISD2, ISDn) definieren, beinhaltet, wobei jede Herausgebersicherheitsdomäne jeweils mit einer unterschiedlichen Kommunikationsschnittstelle (111, 112) assoziiert ist;
dass die Ausführungsumgebung (130, 150, 160) ein Register (174) beinhaltet, das jeder Anwendungsressource der Vielzahl von Anwendungsressourcen eine der Anwendungsressource eigene Anwendungskennung (AID) und einen für eine assoziierte Kommunikationsschnittstelle repräsentativen Indikator (IND) zuordnet, wobei das Register ferner jeder Anwendung der Vielzahl von Anwendungen (190) eine der Anwendung eigene Anwendungskennung (AID) und einen für eine assoziierte Kommunikationsschnittstelle repräsentativen Indikator (IND) zuordnet;
und dass die Ausführungsumgebung dazu konfiguriert ist, die Zielanwendung in Abhängigkeit von der Kommunikationsschnittstelle, die den Befehl empfängt, zu bestimmen und den Zugriff auf eine Anwendungsressource des sicheren Hardwareelements zur Ausführung des Befehls durch die Zielanwendung nur dann zu autorisieren, wenn diese Anwendungsressource mit der Kommunikationsschnittstelle, die den Befehl empfängt, assoziiert ist.

2. Sicheres Hardwareelement nach Anspruch 1, wobei eine erste Herausgebersicherheitsdomäne (ISD1) mit einer Kommunikationsschnittstelle mit Kontakt (111), beispielsweise vom Typ ISO/IEC 7816, assoziiert ist und eine zweite Herausgebersicherheitsdomäne (ISD2) mit einer kontaktlosen Kommunikationsschnittstelle (112), beispielsweise vom Typ ISO/IEC 14443, assoziiert ist.

3. Sicheres Hardwareelement nach Anspruch 1, wobei die Ausführungsumgebung dazu konfiguriert ist, ein Lebenszyklusstatusregister (174) für jede der zwei Herausgebersicherheitsdomänen (ISD1, ISD2) zu verwalten.

4. Sicheres Hardwareelement nach Anspruch 1, wobei eine Herausgebersicherheitsdomäne (ISD2) und assoziierte Anwendungsressourcen der eSE-Konfiguration des Standards GlobalPlatform 2.3 entsprechen und/oder eine Herausgebersicherheitsdomäne (ISD1) und assoziierte Anwendungsressourcen der UICC-Konfiguration des Standards GlobalPlatform 2.3 entsprechen.

5. Sicheres Hardwareelement nach Anspruch 1, wobei das Register (174) mindestens eine Anwendungsressource umfasst, die mit einem Indikator assoziiert ist, der mehreren Kommunikationsschnittstellen gemein ist.

6. Sicheres Hardwareelement nach Anspruch 1, wobei die Ausführungsumgebung (130, 150, 160) eine globale Variable (163) beinhaltet, die auf einen Wert eingestellt ist, der für die Kommunikationsschnittstelle (I, 111, 112), die den Befehl empfängt, repräsentativ ist.

7. Sicheres Hardwareelement nach Anspruch 1, wobei die Ausführungsumgebung eine Ausführungsumgebung (150), die dem Standard GlobalPlatform 2.3 entspricht, umfasst und ein Betriebssystem (140) die Ausführungsumgebung, die dem Standard GlobalPlatform 2.3 entspricht, mit einer Hardwareplattform (110) des sicheren Hardwareelements koppelt.

8. Sicheres Hardwareelement nach Anspruch 7, wobei das Betriebssystem (140) dazu konfiguriert ist, jeden Befehl (CMD), der über eine Kommunikationsschnittstelle (I, 111, 112) empfangen wird, zusammen mit einer Angabe (IND) über die Empfangskommunikationsschnittstelle an die Ausführungsumgebung, die dem Standard GlobalPlatform 2.3 (150) entspricht, zu übertragen.

9. Sicheres Hardwareelement nach Anspruch 7, wobei das Betriebssystem (140) eine lokale Variable (141) beinhaltet, die auf einen Wert eingestellt ist, der für die Kommunikationsschnittstelle (I, 111, 112), die den Befehl empfängt, repräsentativ ist.

10. Sicheres Hardwareelement nach Anspruch 7, wobei die Ausführungsumgebung, die dem Standard GlobalPlatform 2.3 (150) entspricht, eine Java Card-Ausführungsumgebung (160) umfasst, die durch eine virtuelle Java Card-Maschine (161) und Java Card-Anwendungsprogrammierungsschnittstellen (162) gebildet wird, wobei die virtuelle Java Card-Maschine dazu konfiguriert ist, zu kontrollieren, dass jede Anwendungsressource, die zur Ausführung des Befehls (CMD) durch die Zielanwendung verwendet wird, mit der Kommunikationsschnittstelle, die den Befehl empfängt, assoziiert ist.

11. Sicheres Hardwareelement nach Anspruch 10, wobei die virtuelle Java Card-Maschine (161) dazu konfiguriert ist, bei Empfang eines Befehls (CMD) zusammen mit einer Angabe (IND) über eine Empfangskommunikationsschnittstelle eine globale Variable (163) auf einen Wert einzustellen, der für die angegebene Empfangskommunikationsschnittstelle repräsentativ ist.

12. Sicheres Hardwareelement nach Anspruch 10, wobei eine Java Card-Anwendungsprogrammierungsschnittstelle, API, (162) systembedingt mit einer spezifischen Kommunikationsschnittstelle assoziiert ist, sodass diese Java Card-API nur zur Ausführung eines Befehls durch eine mit der spezifischen Kommunikationsschnittstelle assoziierte Zielanwendung verwendet wird.

13. Sicheres Hardwareelement nach Anspruch 7, wobei die Ausführungsumgebung, die dem Standard GlobalPlatform 2.3 (150) entspricht, eine Systemprogrammierungsschnittstelle (170) umfasst, die in GlobalPlatform 2.3 als OPEN bezeichnet wird und dazu konfiguriert ist, die Zielanwendung in Abhängigkeit von der Kommunikationsschnittstelle, die den Befehl empfängt, zu bestimmen.

14. Sicheres Hardwareelement nach Anspruch 13, wobei die OPEN (171) zu Folgendem konfiguriert ist:
Zugreifen auf ein Register (174), das jeder einer Vielzahl von Anwendungsressourcen (190) eine der Anwendungsressource eigene Anwendungskennung (AID) und einen für eine assoziierte Kommunikationsschnittstelle repräsentativen Indikator (IND) zuordnet, und
bei Empfang eines Befehls zur Auswahl einer Anwendung, die durch eine in dem Befehl enthaltene AID-Kennung identifiziert wird, und der an einer Kommunikationsschnittstelle empfangen wird, Auswählen der Anwendung, die in dem Register mit der AID-Kennung und der Empfangskommunikationsschnittstelle assoziiert ist.

15. Sicheres Hardwareelement nach Anspruch 1, wobei die Ausführungsumgebung (130) bei Empfang, über eine zweite Kommunikationsschnittstelle, eines zweiten Befehls, der eine höhere Priorität als der aktuell durch die Zielanwendung ausgeführte Befehl besitzt, zu Folgendem konfiguriert ist:
Aussetzen der Ausführung des Befehls durch die Zielanwendung und Speichern einer Angabe, die für die Kommunikationsschnittstelle, die den ausgesetzten Befehl empfangen hat, repräsentativ ist, und dann
Bestimmen einer zweiten Zielanwendung zur Ausführung des zweiten Befehls in Abhängigkeit von der zweiten Kommunikationsschnittstelle und Kontrollieren, dass jede Anwendungsressource, auf die während der Ausführung des zweiten Befehls durch die zweite Zielanwendung zugegriffen wird, mit der zweiten Kommunikationsschnittstelle assoziiert ist.

16. Verarbeitungsverfahren in einem sicheren Hardwareelement (100), das eine Vielzahl von Kommunikationsschnittstellen (I, 111, 112), eine Vielzahl von Anwendungen (190), eine Vielzahl von Anwendungsressourcen und eine Ausführungsumgebung (130, 150, 160) zur Ausführung der Anwendungen unter Verwendung einer Anwendungsressource der Vielzahl von Anwendungsressourcen beinhaltet, wobei das sichere Hardwareelement (100) ferner eine Vielzahl von Sicherheitsverwaltungsanwendungen beinhaltet, die eine Vielzahl von Herausgebersicherheitsdomänen (ISD1, ISD2, ISDn) definieren, wobei jede Herausgebersicherheitsdomäne jeweils mit einer unterschiedlichen Kommunikationsschnittstelle (111, 112) assoziiert ist, wobei die Ausführungsumgebung (130, 150, 160) ein Register (174) beinhaltet, das jeder Anwendungsressource der Vielzahl von Anwendungsressourcen eine der Anwendungsressource eigene Anwendungskennung (AID) und einen für eine assoziierte Kommunikationsschnittstelle repräsentativen Indikator (IND) zuordnet, wobei das Register ferner jeder Anwendung der Vielzahl von Anwendungen (190) eine der Anwendung eigene Anwendungskennung (AID) und einen für eine assoziierte Kommunikationsschnittstelle repräsentativen Indikator (IND) zuordnet, wobei das Verfahren die folgenden Schritte beinhaltet:
Empfangen (40) eines Befehls (CMD) über eine Kommunikationsschnittstelle (I, 111, 112) zu der Außenwelt (200, 300) des sicheren Hardwareelements,
Bestimmen (505) einer Zielanwendung zur Ausführung des Befehls in Abhängigkeit von der Kommunikationsschnittstelle, die den Befehl empfängt,
Autorisieren (523) des Zugriffs auf eine Anwendungsressource des sicheren Hardwareelements zur Ausführung des Befehls durch die Zielanwendung nur dann, wenn diese Anwendungsressource mit der Kommunikationsschnittstelle, die den Befehl empfängt, assoziiert ist, und
Übertragen (48), über die Kommunikationsschnittstelle, einer von der Zielanwendung empfangenen Antwort (REP) auf den Befehl.

## Claims

1. Secure hardware element (100) comprising a plurality of applications (190) and an execution environment (130, 150, 160) for executing the applications, the execution environment being configured to receive a command (CMD) on a communication interface (I) for communicating with outside (200, 300) the secure hardware element, to determine a target application for executing the command using an application resource from among a plurality of application resources of the secure hardware element, and to transmit, on the communication interface, a response (REP) to the command received from the target application, the secure hardware element being **characterized in that** it comprises a plurality of communication interfaces (111, 112) and a plurality of security management applications defining a plurality of issuer security domains (ISD1, ISD2, ISDn), each issuer security domain being respectively associated with a different communication interface (111, 112);
**in that** the execution environment (130, 150, 160) comprises a register (174) associating, with each application resource from among the plurality of application resources, an application identifier (AID) specific to the application resource and an indicator (IND) representative of an associated communication interface, wherein the register furthermore associates, with each application from among the plurality of applications (190), an application identifier (AID) specific to the application and an indicator (IND) representative of an associated communication interface;
and **in that** the execution environment is configured to determine the target application on the basis of the communication interface receiving the command and to authorize access to an application resource of the secure hardware element for the execution of the command by the target application only if this application resource is associated with the communication interface receiving the command.

2. Secure hardware element according to Claim 1, wherein a first issuer security domain (ISD1) is associated with a contact-based communication interface (111), for example of ISO/IEC 7816 type, and a second issuer security domain (ISD2) is associated with a contactless communication interface (112), for example of ISO/IEC 14443 type.

3. Secure hardware element according to Claim 1, wherein the execution environment is configured to manage a state of life register (174) for each of the two issuer security domains (ISD1, ISD2).

4. Secure hardware element according to Claim 1, wherein an issuer security domain (ISD2) and associated application resources are in accordance with the eSE configuration of the GlobalPlatform 2.3 standard, and/or an issuer security domain (ISD1) and associated application resources are in accordance with the UICC configuration of the GlobalPlatform 2.3 standard.

5. Secure hardware element according to Claim 1, wherein the register (174) contains at least one application resource associated with an indicator common to multiple communication interfaces.

6. Secure hardware element according to Claim 1, wherein the execution environment (130, 150, 160) comprises a global variable (163) set to a value representative of the communication interface (I, 111, 112) receiving the command.

7. Secure hardware element according to Claim 1, wherein the execution environment comprises an execution environment (150) in accordance with the GlobalPlatform 2.3 standard and an operating system (140) interfacing the execution environment in accordance with GlobalPlatform 2.3 with a hardware platform (110) of the secure hardware element.

8. Secure hardware element according to Claim 7, wherein the operating system (140) is configured to transmit, to the execution environment in accordance with the GlobalPlatform 2.3 standard (150), any command (CMD) received on a communication interface (I, 111, 112), accompanied by an indication (IND) of the receiving communication interface.

9. Secure hardware element according to Claim 7, wherein the operating system (140) comprises a local variable (141) set to a value representative of the communication interface (I, 111, 112) receiving the command.

10. Secure hardware element according to Claim 7, wherein the execution environment in accordance with the GlobalPlatform 2.3 standard (150) comprises a Java Card execution environment (160) formed of a Java Card virtual machine (161) and of Java Card application programming interfaces (162), said Java Card virtual machine being configured to check that any application resource used for the execution of the command (CMD) by the target application is associated with the communication interface receiving the command.

11. Secure hardware element according to Claim 10, wherein the Java Card virtual machine (161) is configured, upon receiving a command (CMD) accompanied by an indication (IND) of a receiving communication interface, to set a global variable (163) to a value representative of the indicated receiving communication interface.

12. Secure hardware element according to Claim 10, wherein a Java Card application programming interface (162), API, is natively associated with a specific communication interface, such that this Java Card API is used only for the execution of a command by a target application associated with the specific communication interface.

13. Secure hardware element according to Claim 7, wherein the execution environment in accordance with the GlobalPlatform 2.3 standard (150) comprises a system programming interface (170), called OPEN in GlobalPlatform 2.3, configured to determine the target application on the basis of the communication interface receiving the command.

14. Secure hardware element according to Claim 13, wherein the OPEN (171) is configured to:
access a register (174) associating, with each of a plurality of application resources (190), an application identifier (AID) specific to the application resource and an indicator (IND) representative of an associated communication interface, and
upon receipt of a command to select an application identified by an identifier (AID) contained in the command and received on a communication interface, select the application that, in the register, is associated with the identifier (AID) and with the receiving communication interface.

15. Secure hardware element according to Claim 1, wherein the execution environment (130) is configured, upon receipt, on a second communication interface, of a second command with a higher priority than the command currently being executed by the target application, to:
suspend the execution of the command by the target application and store an indication representative of the communication interface receiving the suspended command, and then
determine a second target application for executing the second command on the basis of the second communication interface and check that any application resource accessed during the execution of the second command by the second target application is associated with the second communication interface.

16. Processing method in a secure hardware element (100) comprising a plurality of communication interfaces (I, 111, 112), a plurality of applications (190), a plurality of application resources, and an execution environment (130, 150, 160) for executing the applications using an application resource from among the plurality of application resources, wherein the secure hardware element (100) furthermore comprises a plurality of security management applications defining a plurality of issuer security domains (ISD1, ISD2, ISDn), each issuer security domain being respectively associated with a different communication interface (111, 112), wherein the execution environment (130, 150, 160) comprises a register (174) associating, with each application resource from among the plurality of application resources, an application identifier (AID) specific to the application resource and an indicator (IND) representative of an associated communication interface, wherein the register furthermore associates, with each application from among the plurality of applications (190), an application identifier (AID) specific to the application and an indicator (IND) representative of an associated communication interface, the method comprising the following steps:
receiving (40) a command (CMD) on a communication interface (I, 111, 112) for communicating with outside (200, 300) the secure hardware element,
determining (505) a target application for the execution of the command on the basis of the communication interface receiving the command,
authorizing (523) access to an application resource of the secure hardware element for the execution of the command by the target application only if this application resource is associated with the communication interface receiving the command, and
transmitting (48), on the communication interface, a response (REP) to the command received from the target application.
